# EUROPÄISCHE PATENTSCHRIFT

(11) **EP 4 082 947 B1**
(45) Veröffentlichungstag und Bekanntmachung des Hinweises auf die Patenterteilung: **27.12.2023**
(21) Anmeldenummer: 22169129.8
(22) Anmeldetag: 21.04.2022
(51) Int. Cl.: B65G 35/06, B65G 47/53, B65G 47/76

(54) **ELEKTRISCH ANGETRIEBENE WEICHE FÜR EINEN DOPPELGURTFÖRDERER**
ELECTRICALLY DRIVEN SWITCH FOR A DOUBLE BELT CONVEYOR
AIGUILLAGE À ENTRAÎNEMENT ÉLECTRIQUE POUR UN TRANSPORTEUR À BANDE DOUBLE

(30) Priorität: 29.04.2021 DE 102021204282
(43) Veröffentlichungstag der Anmeldung: 02.11.2022
(73) Patentinhaber: Robert Bosch GmbH, 70442 Stuttgart (DE)
(72) Erfinder: Kurz, Steffen, 71364 Winnenden (DE); Kiebel, Markus, 70499 Stuttgart (DE)

(56) Entgegenhaltungen:
- EP-A1- 0 247 168
- DE-U1-202005 013 799
- FR-A1- 3 074 071
- JP-A- 2019 064 794
- US-A1- 2005 061 091
- US-A1- 2020 397 192
- Montech Ag: "Montech - Transfer System LT40", , 14. Januar 2019 (2019-01-14), XP055920786, Gefunden im Internet: URL:https://www.youtube.com/watch?v=mX6hQk PlWHw [gefunden am 2022-09-19]

## Beschreibung

Die Erfindung betrifft eine Weiche gemäß dem Oberbegriff von Anspruch 1 und ein Transportsystem mit einer derartigen Weiche.

In dem Video, welches am 17.03.2021 unter der Internetadresse https://www.youtube.com/watch?v=sNDoOjlFevI&t=8s abrufbar war, ist ab der Abspielzeit 1:51 Minuten eine Weiche mit einem Weichenarm zu sehen. Der Weichenarm ist in einer zweiten Endstellung unterhalb der durch die Förderbänder definierten Transportebene versenkt. In einer ersten Endstellung ist er über die Transportebene angehoben, wobei er in eine Stellung geschwenkt ist, in welcher das Transportgut in Form eines Werkstückträgers von einer ersten Transportstrecke auf eine zweite Transportstrecke umgelenkt wird. Das Video offenbart die Merkmale des Oberbegriffs des Anspruchs 1.

Ein Vorteil der vorliegenden Erfindung besteht darin, dass der Weichenarm rein elektrisch, insbesondere ohne Druckluft, bewegt werden kann. Der gesamte Antrieb ist besonders einfach und kostengünstig ausgebildet. Der elektrische Antrieb lässt sich besonders einfach ansteuern, wobei weder ein Frequenzumrichter noch ein Servoregler erforderlich sind.

Gemäß Anspruch 1 wird vorgeschlagen, dass der Weichenarm über ein Getriebe mit einem einzigen Elektromotor derart in Antriebsverbindung steht, dass er allein durch Antrieb mit dem Elektromotor in zwei über das Getriebe gekoppelten Freiheitsgraden zwischen der ersten und der zweiten Endstellung hin- und her bewegt werden kann. In der zweiten Endstellung ist vorzugsweise die gesamte Weiche unterhalb der Transportebene angeordnet, so dass kein Teil der Weiche den Weg des Transportguts versperrt. Bei den Zugmitteln handelt es sich vorzugsweise jeweils um ein Förderband oder eine Förderkette. Das Zugmittel wird vorzugsweise von einem zugeordneten Träger getragen, welcher höchst vorzugsweise wenigstens einen Profilkörper umfasst, der sich mit einer konstanten Querschnittsform entlang des Zugmittels bzw. der entsprechenden Transportrichtung erstreckt.

In den abhängigen Ansprüchen sind vorteilhafte Weiterbildungen und Verbesserungen der Erfindung angegeben.

Es kann vorgesehen sein, dass das Getriebe so ausgelegt ist, dass es in der ersten Endstellung zumindest hinsichtlich einer Linearbewegung des Weichenarms in Richtung der ersten Drehachse selbsthemmend ist. Damit wird die Gewichtskraft des Weichenarms allein vom Getriebe getragen, ohne dass der Elektromotor mit Strom beaufschlagt werden muss. In der Folge wird eine Überhitzung des Elektromotors vermieden, weil er ausschließlich kurzzeitig, während der Bewegung des Weichenarms, mit Strom beaufschlagt wird. Hinsichtlich der Drehbewegung des Weichenarms kann die erste und/oder die zweite Transportstrecke einen Endanschlag für den Weichenarm bilden. Es ist aber auch denkbar, dass das Getriebe einen derartigen Endanschlag bildet.

Es kann vorgesehen sein, dass das Getriebe so ausgelegt ist, dass es in der zweiten Endstellung einen Endanschlag für die Bewegung des Weichenarms entlang der ersten Drehachse in Richtung der zweiten Endstellung bildet. Damit wird auch in der zweiten Endstellung das Gewicht des Weichenarms allein durch das Getriebe abgestützt, so dass der Elektromotor nicht mit Strom beaufschlagt werden muss. Zusätzlich kann das Getriebe einen Endanschlag für die Drehbewegung des Weichenarms in Richtung der zweiten Endstellung bilden. In der zweiten Endstellung bildet die erste bzw. die zweite Transportstrecke vorzugsweise keinen Endanschlag für die Drehbewegung des Weichenarms, da dies vergleichsweise aufwändig wäre.

Es kann vorgesehen sein, dass der Elektromotor als Schrittmotor ausgeführt ist, welcher über einen Zahnriemen mit dem Getriebe in Antriebsverbindung steht, wobei der entsprechende Zahnriementrieb so ausgelegt ist, dass er eine Übersetzung bewirkt, die größer als 2 ist. Ein Schrittmotor ist besonders kostengünstig und kann auf einfache Weise angesteuert werden. Mittels des vorgeschlagenen Zahnriementriebs kann dennoch ein ausreichend großes Drehmoment erzeugt werden. Die oben diskutierten Endanschläge können genutzt werden, um eine definierte Anfangsposition des Weichenarms anzufahren. Hierbei kann man ohne Weiteres in Kauf nehmen, dass während der entsprechenden Initialisierungsfahrt Schritte des Schrittmotors übersprungen werden. Im sich anschließenden Normalbetrieb schließt die erfindungsgemäße Konstruktion sicher aus, dass ein derartiges Überspringen von Schritten stattfindet. Die Weiche kann also im einfachsten Fall ganz ohne Sensoren für die Stellung des Weichenarms betrieben werden, wobei dennoch eine genaue Positionierung möglich ist. Die genannte Untersetzung ist vorzugsweise größer als 2,8. Die Übersetzung ist vorzugsweise definiert als die Drehzahl des Elektromotors dividiert durch die (Eingangs-)Drehzahl des Getriebes. Eine Übersetzung größer als Eins entspricht also einer Übersetzung ins Langsame (https://de.wikipedia.org/wiki/%C3%9Cbersetzung (Technik)). Wegen des Zahnriemens ist eine geringe Ausrichtgenauigkeit zwischen Elektromotor und Getriebe erforderlich.

Es kann vorgesehen sein, dass das Getriebe eine bezüglich einer zweiten Drehachse drehbar gelagerte Steuerwalze umfasst, welche mit dem Elektromotor in Drehantriebsverbindung steht, wo sich die Steuerwalze zumindest abschnittsweise mit einer konstanten Querschnittsform entlang der zweiten Drehachse erstreckt, wobei die entsprechende Umfangsfläche einen sich entlang ihres Umfangs verändernden Steuerabstand zur zweiten Drehachse aufweist. Der Steuerabstand definiert dementsprechend die Hubstellung des Weichenarms. Vorzugsweise ändert sich der Steuerabstand zwischen der ersten und der zweiten Endstellung stetig und knickfrei. Die Steuerwalze ist vorzugsweise fest mit einem Zahnriemenrad des oben erläuterten Zahnriementriebs verbunden.

Es kann vorgesehen sein, dass der Steuerabstand in der ersten Endstellung maximal ist. Damit kann die oben erläuterte Selbsthemmung in der ersten Endstellung auf einfache Weise erreicht werden. Vorzugsweise ändert sich der Steuerabstand über die erste Endstellung hinweg stetig und knickfrei. Damit beträgt die Steigung des Steuerabstands über den Drehwinkel in der ersten Endstellung Null, so dass eine besonders gute Selbsthemmung gegeben ist. Es versteht sich, dass der Teil der Umfangsfläche der Steuerwalz hinter der ersten Endstellung im Betrieb nicht genutzt wird, um den Weichenarm in Richtung der ersten Drehachse zu bewegen.

Es kann vorgesehen sein, dass der Steuerabstand in der zweiten Endstellung minimal ist. Damit bildet die Steuerwalze den oben angesprochenen Endanschlag hinsichtlich einer Bewegung in Richtung der ersten Drehachse. Hinter der zweiten Endstellung, also außerhalb des im Betrieb genutzten Umfangsabschnitts der Umfangsfläche, kann der Steuerabstand konstant und gleich dem minimalen Steuerabstand sein. Außerhalb das Nutzbereichs der Umfangsfläche zwischen der ersten und der zweiten Endstellung ändert sich der Steuerabstand vorzugsweise schnell zwischen seinem kleinsten und seinem größten Wert.

Es kann vorgesehen sein, dass der Weichenarm auf einem gesonderten Schlitten bezüglich der ersten Drehachse drehbar gelagert ist, wobei der Schlitten in Richtung der ersten Drehachse linearbeweglich geführt ist, wobei eine Steuerfläche des Schlittens auf der Umfangsfläche der Steuerwalze aufliegt. Damit kann der veränderliche Steuerabstand besonders einfach in eine Hubbewegung des Weichenarms übersetzt werden. Die erste Drehachse ist vorzugsweise parallel zur Richtung der Schwerkraft ausgerichtet, wobei die Umfangsfläche der Steuerwalze über die Steuerfläche eine Gewichtskraft des Schlittens mit dem Weichenarm abstützt.

Es kann vorgesehen sein, dass die Steuerwalze im Bereich der Umfangsfläche eine Steuernut oder einen Steuervorsprung aufweist, welche bzw. welcher schraubenförmig bezüglich der zweiten Drehachse verläuft, wobei der Weichenarm fest mit einem gesonderten Steuerarm verbunden ist, welcher mit einem freien Ende mit der Steuernut bzw. mit dem Steuervorsprung gekoppelt ist. Es wäre auch denkbar, dass der Weichenarm selbst den Steuerarm bildet. Der bevorzugte zusätzliche Steuerarm ermöglicht demgegenüber einen besonders Platz sparendenden Weichenarm. Weiter lässt sich die Steuerwalze günstig zwischen den beiden Profilkörpern der ersten Transportstrecke anordnen, insbesondere, wenn deren Abstand klein ist.

Es kann vorgesehen sein, dass der Schlitten eine Grundplatte umfasst, welche parallel zur Transportebene angeordnet ist, wobei der Weichenarm und der Steuerarm auf gegenüberliegenden Seiten der Grundplatte angeordnet sind. Der Steuerarm und der Weichenarm sind vorzugsweise über einen kreiszylindrischen Achsabschnitt fest miteinander verbunden, wobei der Achsabschnitt drehbar an der Grundplatte gelagert ist, höchst vorzugsweise mittels eines Gleit- oder eines Wälzlagers. Die Grundplatte ist vorzugsweise als ebene Platte mit konstanter Dicke ausgeführt.

Es kann vorgesehen sein, dass die erste Drehachse im Bereich zwischen 30% und 70%, vorzugsweise zwischen 40% und 60%, der Länge der Umlenkfläche in Bewegungsrichtung des Transportguts angeordnet ist. Quer zur Umlenkfläche durchsetzt die erste Drehachse vorzugsweise den Weichenarm, wobei der genaue Ort weitgehend frei wählbar ist.

Schutz wird außerdem für ein Transportsystem mit einer ersten und einer zweiten Transportstrecke und einer erfindungsgemäßen Weiche beansprucht, wobei zumindest die erste Transportstrecke zwei parallel beabstandete, endlos umlaufende Zugmittel umfasst, wobei alle Zugmittel eine gemeinsame Transportebene definieren, wobei die erste Drehachse senkrecht zur Transportebene ausgerichtet ist, wobei sie zwischen den beiden Zugmitteln der ersten Förderstrecke angeordnet ist.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird im Folgenden anhand der beigefügten Zeichnungen näher erläutert. Es zeigt:
- Fig. 1: eine perspektivische Ansicht eines Transportsystems mit einer erfindungsgemäßen Weiche, wobei sich der Weichenarm in der ersten Endstellung befindet;
- Fig. 2: das Transportsystem nach Fig. 1, wobei sich der Weichenarm in der zweiten Endstellung befindet;
- Fig. 3: eine perspektivische Ansicht der Weiche des Transportsystems nach Fig. 1 ohne das umgebende Gehäuse; und
- Fig. 4: eine weitere perspektivische Ansicht der Weiche nach Fig. 3, wobei weitere Teile weggelassen wurden.

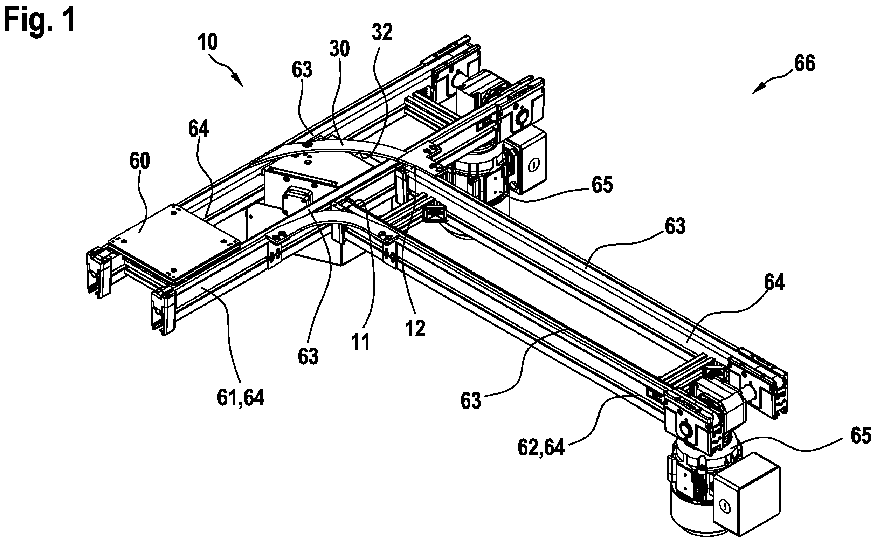

Fig. 1 zeigt eine perspektivische Ansicht eines Transportsystems 66 mit einer erfindungsgemäßen Weiche 10, wobei sich der Weichenarm 30 in der ersten Endstellung befindet. Das Transportsystem 66 umfasst ein erste und eine zweite Transportstrecke 61; 62, welche T-förmig aneinander angebaut sind. Beide Transportstrecken 61;62 haben jeweils zwei endlos umlaufende Zugmittel 63, die parallel beabstandet zueinander angeordnet sind, wobei die nach oben weisenden Oberflächen aller Zugmittel 63 in einer gemeinsamen Transportebene angeordnet sind. Bei den Zugmitteln handelt es sich vorliegend um endlose Transportbänder, die jeweils von einem zugeordneten Träger 64 beweglich gehalten werden. Die Träger 64 sind vorliegend aus Aluminium-Strangpressprofilen hergestellt. Beide Transportstrecken 61; 62 haben jeweils einen Zugmittelantrieb 65, mit welchem die beiden zugeordneten Zugmittel 63 synchron in Bewegung versetzt werden können. Die Zugmittelantriebe 65 umfassen vorzugsweise jeweils einen Elektromotor.

Auf dem vorliegenden Transportsystem 66 wird vorzugsweise ein Transportgut 60 in Form von Werkstückträgern transportiert. Hierbei kann es sich im einfachsten Fall um ebene Platten mit konstanter Dicke handeln, die wiederum (nicht dargestellt) Werkstücke tragen, die beispielsweise zwischen verschiedenen Bearbeitungsstationen einer Fertigungsstraße transportiert werden.

Mit der erfindungsgemäßen Weiche 10 kann das in Fig. 1 gezeigte Transportgut 60 von der ersten Transportstrecke 61 auf die zweite Transportstrecke 62 überführt werden. Der Weichenarm 30 befindet sich hierfür in der in Fig. 1 gezeigten ersten Endstellung, oberhalb der Transportebene, wobei er in eine Stellung geschwenkt ist, in welcher sich seine gebogene Umlenkfläche 32 über die gesamte Breite der ersten Transportstrecke 61 erstreckt. Das mittels der Zugmittel 63 der ersten Transportstrecke 61 bewegte Transportgut 60 wird folglich von der Umlenkfläche 32 am Weichenarm 30 aufgehalten und zur zweiten Transportstrecke 62 hin umgelenkt. Sobald das Transportgut 60 in Eingriff mit den Zugmitteln 63 der zweiten Transportstrecke 62 gelangt, wird die Schwenkbewegung des Transportguts 60 durch die entsprechenden Antriebskräfte zu Ende geführt.

Zur Unterstützung der Schwenkbewegung des Transportguts 60 innerhalb der Weiche 10 sind am Transportsystem 66 eine bogenförmige innere Führungsfläche 11 und eine gerade oder leicht gebogene äußere Führungsfläche 12 ortsfest angeordnet. Die äußere Führungsfläche 12 setzt in der ersten Endstellung die gebogene Umlenkfläche 32 am Weichenarm 30 stetig und knickfrei fort. Das entsprechende Bauteil bildet gleichzeitig einen Endanschlag für den Weichenarm 30.

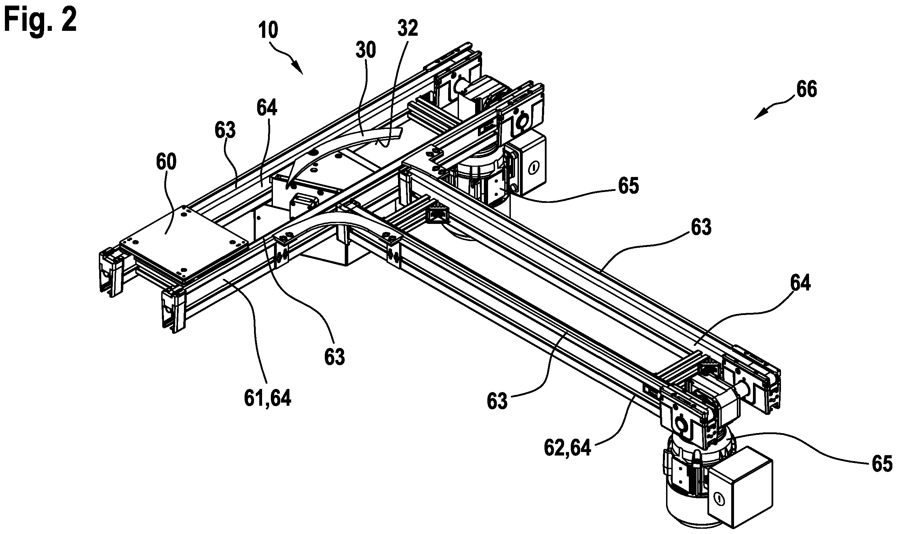

Fig. 2 zeigt das Transportsystem 66 nach Fig. 1, wobei sich der Weichenarm 30 in der zweiten Endstellung befindet. Der Weichenarm 30 ist dabei derart geschwenkt, dass er sich vollständig zwischen den beiden Trägern 64 der ersten Transportstrecke 61 befindet, wobei er sich vollständig unterhalb der Transportebene befindet. Das in Fig. 2 gezeigte Transportgut 60 wird also von den Zugmitteln 63 der ersten Transportstrecke 61 in gerader Linie über die Weiche 10 hinweg bewegt, wobei es nicht zur zweiten Transportstrecke 62 hin umgelenkt wird.

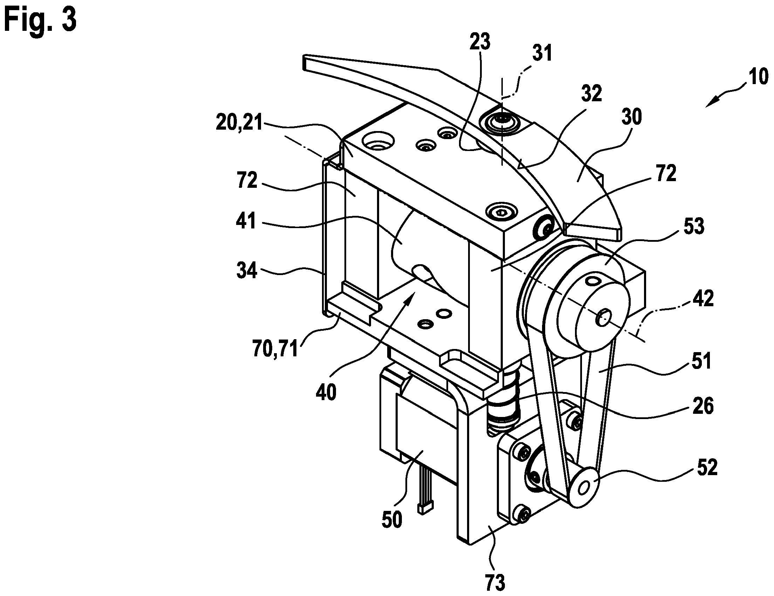

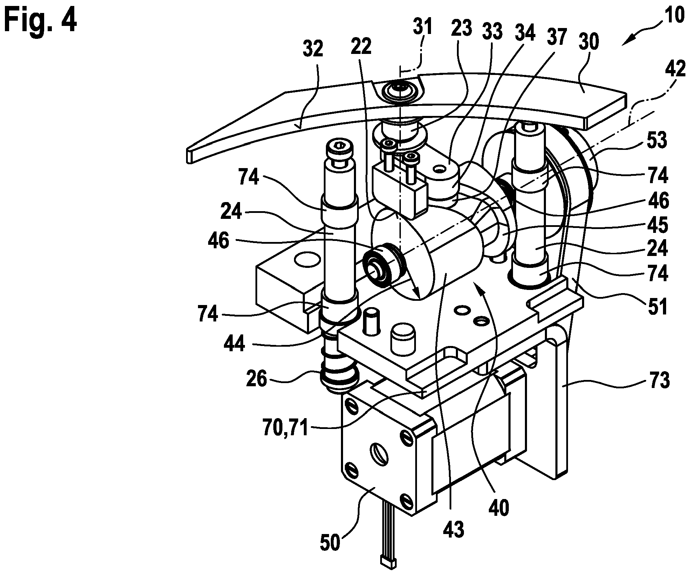

Fig. 3 zeigt eine perspektivische Ansicht der Weiche 10 des Transportsystems nach Fig. 1 ohne das umgebende Gehäuse. Die Weiche 10 umfasst eine Basis 70, welche fest mit der ersten Transportstrecke (Nr. 61 in Fig. 1) verbindbar, insbesondere verschraubbar, ist. Die Basis 70 umfasst vorliegend ein erstes Basisteil 71, zwei zweite Basisteile 72 und ein drittes Basisteil 73, welche fest miteinander verbunden, insbesondere verschraubt, sind. Das erste Basisteil 71 ist plattenförmig ausgebildet, wobei die beiden zweiten Basisteile 72 senkrecht an das erste Basisteil 71 angebaut sind, so dass sich insgesamt eine U-Form ergibt. Die zweiten Basisteile 72 werden jeweils von einer zugeordneten kreiszylindrischen Führungsstange (Nr. 24 in Fig. 4) durchsetzt, welche jeweils linearbeweglich am zugeordneten zweiten Basisteil 72 gelagert ist. Die Führungsstangen sind an ihrer in Fig. 3 oberen Stirnseite mit der Grundplatte 21 des Schlittens 20 fest verbunden, insbesondere verschraubt.

Weiter nehmen die zweiten Basisteile 72 jeweils ein Drehlager (Nr. 46 in Fig. 4) in Form eines Radialwälzlagers auf, mit welchem die Steuerwalze 41 bezüglich der zweiten Drehachse 42 drehbar gelagert ist. Die Steuerwalze 41 ist dabei zwischen den beiden zweiten Basisteilen 72 angeordnet, wobei sie in Richtung der zweiten Drehachse 42 von den Drehlagern 46 unverschiebbar gehalten ist.

Das dritte Basisteil 73 ist ein L-förmiges, gebogenes Blechteil, welches mit einem L-Schenkel an der Unterseite des ersten Basisteils 71 befestigt, insbesondere verschraubt, ist. Der andere L-Schenkel bildet einen Flansch, an welchem der Elektromotor 50 befestigt ist, welcher vorliegend als Schrittmotor ausgebildet ist. Die Antriebswelle des Elektromotors 50 ist mit einem kleineren ersten Zahnriemenrad 52 fest verbunden. Die Steuerwalze 41 ist mit einem größeren zweiten Zahnriemenrad 53 fest verbunden. Das erste und das zweite Zahnriemenrad 52; 53 stehen über einen Zahnriemen in Drehantriebsverbindung, wobei die entsprechende Übersetzung deutlich größer als Eins ist, wobei sie beispielsweise Drei beträgt. Der Elektromotor 59 dreht sich also vergleichsweise schnell und mit einem geringen Drehmoment, wobei sich die Steuerwalze 41 langsam mit einem vergleichsweise hohen Drehmoment dreht. Die Steuerwalze 41 ist Bestandteil eines Getriebes 40, welches mit Bezug auf Fig. 4 näher erläutert wird.

Hinzuweisen ist noch auf das Abdeckblech 25 am Schlitten 20, welches Bestandteil des Gehäuses ist.

Fig. 4 zeigt eine weitere perspektivische Ansicht der Weiche 10 nach Fig. 3, wobei weitere Teile weggelassen wurden, namentlich die Grundplatte und die zweiten Basisteile. Hierdurch wird zunächst das Drehlager 23 sichtbar, mit welchem der Weichenarm 30 bezüglich der ersten Drehachse 31 drehbar gelagert ist. Dieses Drehlager ist fest in der Grundplatte (Nr. 21 in Fig. 3) aufgenommen, wobei es von einem kreiszylindrischen Achsabschnitt durchsetzt wird, welcher den Weichenarm 30 drehfest mit einem Steuerarm 33 verbindet. Dementsprechend sind der Weichenarm 30 und der Steuerarm 33 auf gegenüberliegenden Seiten der Grundplatte angeordnet. Der Steuerarm 33 ist an seinem von der ersten Drehachse 31 entfernten, freien Ende 34 mit einer kreiszylindrischen Steuernocke 37 versehen, welche in die schraubenförmige Steuernut 45 an der Außenumfangsfläche der Steuerwalze 41 eingreift.

Weiter sind in Fig. 4 die beiden kreiszylindrischen Führungsstangen 24 zu erkennen, mit welchen der Schlitten in Richtung der ersten Drehachse 31 linearbeweglich geführt ist. Die Führung geschieht mit jeweils zwei Gleitbuchsen 74, die fest in ein zugeordnetes zweites Basisteil (Nr. 72 in Fig. 3) eingebaut sind. Die von der Grundplatte abgewandten Enden der beiden Führungsstangen 24 sind jeweils von einer Schraubenfeder 26 umgeben, welche den Schlitten in Richtung der zweiten Endstellung vorspannen, so dass die Steuerfläche 22 am Schlitten gegen die Umfangsfläche der Steuerwalz 41 gedrückt wird.

Abgesehen von der Steuernut 45 erstreckt sich die Umfangsfläche der Steuerwalze 41 mit einer konstanten Querschnittsform entlang der zweiten Drehachse 42. Die Querschnittsform wird von einem Steuerabstand 44 definiert, der sich entlang des Umfangs der Steuerwalze 41 ändert. Der Steuerabstand 44 an der Steuerfläche 22 des Schlittens definiert dementsprechend die Hubstellung des Schlittens. Durch Drehung der Steuerwalze 41 mittels des Elektromotors 50 kann der maßgebliche Steuerabstand 44 also verändert werden. Bei einer Drehung der Steuerwalze 41 ändert sich gleichzeitig der Ort, an welchem die Steuernocke in die Steuernut 45 eingreift, so dass sich wiederum die Drehstellung des Weichenarms 30 ändert. Eine Drehung des Elektromotors 50 bewirkt also gleichzeitig eine Hubbewegung und eine Schwenkbewegung des Weichenarms 30, also eine Bewegung in zwei Freiheitsgraden.

Fig. 4 zeigt die zweite Endstellung des Weichenarms 30, in welcher der maßgebliche Steuerabstand 44 an der Steuerfläche 22 minimal ist. Die Steuerwalze 41 bildet damit einen Endanschlag für die Bewegung des Schlittens nach unten, so dass die Gewichtskraft des Schlittens durch die Steuerwalze 41 abgestützt wird. Der Weichenarm 30 bleibt also in dieser Stellung, ohne dass der Elektromotor 50 mit Strom versorgt werden muss. Hierdurch wird eine Überhitzung des Elektromotors 50 sicher vermieden.

Weiter ist darauf hinzuweisen, dass sich die erste Drehachse 31 in etwa in der Mitte des Weichenarms 30 befindet.

### Bezugszeichen

- 10: Weiche
- 11: innere Führungsfläche
- 12: äußere Führungsfläche

- 20: Schlitten
- 21: Grundplatte
- 22: Steuerfläche
- 23: Drehlager
- 24: Führungsstange
- 25: Abdeckblech
- 26: Schraubenfeder

- 30: Weichenarm
- 31: erste Drehachse
- 32: Umlenkfläche
- 33: Steuerarm
- 34: freies Ende des Steuerarms
- 37: Steuernocke

- 40: Getriebe
- 41: Steuerwalze
- 42: zweite Drehachse
- 43: Umfangsfläche der Steuerwalze
- 44: Steuerabstand
- 45: Steuernut
- 46: Drehlager
- 50: Elektromotor
- 51: Zahnriemen
- 52: erstes Zahnriemenrad
- 53: zweites Zahnriemenrad

- 60: Transportgut
- 61: erste Transportstrecke
- 62: zweite Transportstrecke
- 63: Zugmittel
- 64: Träger
- 65: Zugmittelantrieb
- 66: Transportsystem

- 70: Basis
- 71: erstes Basisteil
- 72: zweites Basisteil
- 73: drittes Basisteil
- 74: Gleitbuchse

## Patentansprüche

1. Weiche (10) zur Verwendung mit einer ersten und einer zweiten Transportstrecke (61; 62), wobei zumindest die erste Transportstrecke (61) zwei parallel beabstandete, endlos umlaufende Zugmittel (63) umfasst, wobei alle Zugmittel (63) eine gemeinsame Transportebene definieren, wobei die Weiche (10) einen Weichenarm (30) umfasst, welcher bezüglich einer ersten Drehachse (31) schwenkbar gelagert ist, wobei er in Richtung der ersten Drehachse (31) linearbeweglich geführt ist, wobei er zwischen einer ersten und einer zweiten Endstellung hin und her bewegbar ist, wobei die erste Drehachse (31) senkrecht zur Transportebene ausgerichtet ist, wobei sie zwischen den beiden Zugmitteln (63) der ersten Förderstrecke anordenbar ist, wobei der Weichenarm (30) eine konkav gebogene Umlenkfläche (32) hat, welche so ausgeführt ist, dass, wenn sich der Weichenarm (30) in der ersten Endstellung befindet, ein Transportgut (60) mittels der Umlenkfläche (32) von der ersten (61) auf die zweite Transportstrecke (62) überführt werden kann oder umgekehrt, wobei der Weichenarm (30) in der zweiten Endstellung vollständig unterhalb der Transportebene angeordnet ist, so dass das Transportgut (60) entlang der ersten Transportstrecke (61) über die Weiche (10) hinweg bewegt werden kann,
**dadurch gekennzeichnet, dass** der Weichenarm (30) über ein Getriebe (40) mit einem einzigen Elektromotor (50) derart in Antriebsverbindung steht, dass er allein durch Antrieb mit dem Elektromotor (50) in zwei über das Getriebe (40) gekoppelten Freiheitsgraden zwischen der ersten und der zweiten Endstellung hin- und her bewegt werden kann.

2. Weiche (10) nach Anspruch 1,
wobei das Getriebe (40) so ausgelegt ist, dass es in der ersten Endstellung zumindest hinsichtlich einer Linearbewegung des Weichenarms (30) in Richtung der ersten Drehachse (31) selbsthemmend ist.

3. Weiche (10) nach einem der vorstehenden Ansprüche,
wobei das Getriebe (40) so ausgelegt ist, dass es in der zweiten Endstellung einen Endanschlag für die Bewegung des Weichenarms (30) entlang der ersten Drehachse (31) in Richtung der zweiten Endstellung bildet.

4. Weiche (10) nach einem der vorstehenden Ansprüche,
wobei der Elektromotor (50) als Schrittmotor ausgeführt ist, welcher über einen Zahnriemen (51) mit dem Getriebe (30) in Antriebsverbindung steht, wobei der entsprechende Zahnriementrieb (51) so ausgelegt ist, dass er eine Übersetzung bewirkt, die größer als 2 ist.

5. Weiche (10) nach einem der vorstehenden Ansprüche,
wobei das Getriebe (40) eine bezüglich einer zweiten Drehachse (42) drehbar gelagerte Steuerwalze (41) umfasst, welche mit dem Elektromotor (50) in Drehantriebsverbindung steht, wo sich die Steuerwalze (41) zumindest abschnittsweise mit einer konstanten Querschnittsform entlang der zweiten Drehachse (42) erstreckt, wobei die entsprechende Umfangsfläche einen sich entlang ihres Umfangs verändernden Steuerabstand (44) zur zweiten Drehachse (42) aufweist.

6. Weiche (10) nach Anspruch 5, rückbezogen auf Anspruch 2,
wobei der Steuerabstand (44) in der ersten Endstellung maximal ist.

7. Weiche (10) nach einem der Ansprüche 5 bis 6, rückbezogen auf Anspruch 3,
wobei der Steuerabstand (44) in der zweiten Endstellung minimal ist.

8. Weiche (10) nach einem der Ansprüche 5 bis 7,
wobei der Weichenarm (30) auf einem gesonderten Schlitten (20) bezüglich der ersten Drehachse (31) drehbar gelagert ist, wobei der Schlitten (20) in Richtung der ersten Drehachse (31) linierbeweglich geführt ist, wobei eine Steuerfläche (22) des Schlittens auf der Umfangsfläche der Steuerwalze (41) aufliegt.

9. Weiche (10) nach einem der Ansprüche 5 bis 8,
wobei die Steuerwalze (41) im Bereich der Umfangsfläche (43) eine Steuernut (45) oder einen Steuervorsprung aufweist, welche bzw. welcher schraubenförmig bezüglich der zweiten Drehachse (42) verläuft, wobei der Weichenarm (30) fest mit einem gesonderten Steuerarm (33) verbunden ist, welcher mit einem freien Ende mit der Steuernut (45) bzw. mit dem Steuervorsprung gekoppelt ist.

10. Weiche (10) nach Anspruch 9, rückbezogen auf Anspruch 8,
wobei der Schlitten (20) eine Grundplatte (21) umfasst, welche parallel zur Transportebene angeordnet ist, wobei der Weichenarm (30) und der Steuerarm (33) auf gegenüberliegenden Seiten der Grundplatte (21) angeordnet sind.

11. Weiche nach einem der vorstehenden Ansprüche,
wobei die erste Drehachse (31) im Bereich zwischen 30% und 70%, vorzugsweise zwischen 40% und 60%, der Länge der Umlenkfläche (31) in Bewegungsrichtung des Transportguts (60) angeordnet ist.

12. Transportsystem (66) mit einer ersten und einer zweiten Transportstrecke (61; 62) und einer Weiche (10) nach einem der vorstehenden Ansprüche, wobei zumindest die erste Transportstrecke (61) zwei parallel beabstandete, endlos umlaufende Zugmittel (63) umfasst, wobei alle Zugmittel (63) eine gemeinsame Transportebene definieren, wobei die erste Drehachse (31) senkrecht zur Transportebene ausgerichtet ist, wobei sie zwischen den beiden Zugmitteln (63) der ersten Förderstrecke (61) angeordnet ist.

## Claims

1. Turnout (10) for use with a first and a second transport section (61; 62), at least the first transport section (61) comprising two endlessly revolving traction means (63) spaced apart in parallel, all traction means (63) defining a common transport level, the turnout (10) comprising a turnout arm (30) that is supported so as to be swivelable with respect to a first axis of rotation (31), being guided in a linear movable manner in the direction of the first axis of rotation (31), being movable back and forth between a first and a second end position, the first axis of rotation (31) being perpendicular to the transport level, being able to be located between the two traction means (63) of the first conveying section, the turnout arm (30) having a concavely curved deflection surface (32) that is embodied in such a manner that, when the turnout arm (30) is in the first end position, a transported item (60) can be transferred from the first (61) to the second transport section (62) or vice versa by means of the deflection surface (32), the turnout arm (30) being located entirely beneath the transport level in the second end position, such that the transported item (60) can be moved, along the first transport section (61), beyond the turnout (10),
**characterized in that** the turnout arm (30) is connected in respect of drive, via a transmission (40), to a single electric motor (50) in such a manner that it can be moved back and forth between the first and the second end position solely by being driven by the electric motor (50) in two degrees of freedom coupled via the transmission (40).

2. Turnout (10) according to Claim 1,
the transmission (40) being designed to be self-inhibiting in the first end position, at least in respect of a linear movement of the turnout arm (30) in the direction of the first axis of rotation (31).

3. Turnout (10) according to either one of the preceding claims,
the transmission (40) being designed in such a manner that in the second end position it forms an end stop for the movement of the turnout arm (30) along the first axis of rotation (31) in the direction of the second end position.

4. Turnout (10) according to any one of the preceding claims,
the electric motor (50) being embodied as a stepper motor that is connected in respect of drive to the transmission (30) via a toothed belt (51), the corresponding toothed belt drive (51) being designed in such a manner that it effects a transmission ratio that is greater than 2.

5. Turnout (10) according to any one of the preceding claims,
the transmission (40) comprising a control roller (41) that is mounted so as to be rotatable with respect to a second axis of rotation (42) and that is connected in respect of rotary drive to the electric motor (50), where the control roller (41) extends at least portionally with a constant cross-sectional shape along the second axis of rotation (42), the corresponding circumferential surface having, from the second axis of rotation (42), a control distance (44) that varies along its circumference.

6. Turnout (10) according to Claim 5, with reference back to Claim 2,
the control distance (44) being maximal in the first end position.

7. Turnout (10) according to any one of Claims 5 to 6, with reference back to Claim 3,
the control distance (44) being minimal in the second end position.

8. Turnout (10) according to any one of Claims 5 to 7, the turnout arm (30) being mounted on a separate carriage (20) so as to be rotatable with respect to the first axis of rotation (31), the carriage (20) being guided in a linearly movable manner in the direction of the first axis of rotation (31), a control surface (22) of the carriage bearing on the circumferential surface of the control roller (41) .

9. Turnout (10) according to any one of Claims 5 to 8, the control roller (41), in the region of the circumferential surface (43), having a control groove (45) or a control projection that extends helically with respect to the second axis of rotation (42), the turnout arm (30) being fixedly connected to a separate control arm (33) that is coupled, at a free end, to the control groove (45), or to the control projection.

10. Turnout (10) according to Claim 9, with reference back to Claim 8,
the carriage (20) comprising a base plate (21) that is parallel to the transport level, the turnout arm (30) and the control arm (33) being located on opposite sides of the base plate (21).

11. Turnout according to any one of the preceding claims,
sthe first axis of rotation (31) being located in the range of between 30% and 70%, preferably between 40% and 60%, of the length of the deflection surface (31) in the direction of movement of the transported item (60).

12. Transport system (66) comprising a first and a second transport section (61; 62) and a turnout (10) according to any one of the preceding claims, at least the first transport section (61) comprising two endlessly revolving traction means (63) spaced apart in parallel, all traction means (63) defining a common transport level, the first axis of rotation (31) being perpendicular to the transport level, being located between the two traction means (63) of the first conveying section (61).

## Revendications

1. Aiguillage (10) destiné à être utilisé avec une première et une deuxième voie de transport (61 ; 62), dans lequel au moins la première voie de transport (61) comprend deux moyens de traction (63) espacés parallèlement, circulant sans fin, dans lequel tous les moyens de traction (63) définissent un plan de transport commun, dans lequel l'aiguillage (10) comprend un bras d'aiguillage (30) qui est monté de manière pivotante par rapport à un premier axe de rotation (31), dans lequel il est guidé de manière mobile linéairement en direction du premier axe de rotation (31), dans lequel il est déplaçable en va-et-vient entre une première et une deuxième position d'extrémité, dans lequel le premier axe de rotation (31) est orienté perpendiculairement au plan de transport, dans lequel il peut être agencé entre les deux moyens de traction (63) de la première voie de transport, dans lequel le bras d'aiguillage (30) a une surface de déviation (32) incurvée de manière concave, qui est réalisée de telle sorte que lorsque le bras d'aiguillage (30) se trouve dans la première position d'extrémité, un produit transporté (60) peut être transféré au moyen de la surface de déviation (32) de la première (61) à la deuxième voie de transport (62) ou inversement, dans lequel le bras d'aiguillage (30) est agencé dans la deuxième position d'extrémité entièrement en dessous du plan de transport, de telle sorte que le produit transporté (60) peut être déplacé le long de la première voie de transport (61) au-delà de l'aiguillage (10),
**caractérisé en ce que** le bras d'aiguillage (30) est en liaison d'entraînement avec un moteur électrique unique (50) par l'intermédiaire d'une transmission (40) de telle sorte qu'il peut être déplacé en va-et-vient entre la première et la deuxième position d'extrémité uniquement par entraînement avec le moteur électrique (50) selon deux degrés de liberté couplés par l'intermédiaire de la transmission (40).

2. Aiguillage (10) selon la revendication 1,
dans lequel la transmission (40) est conçue pour être autobloquante dans la première position d'extrémité au moins en ce qui concerne un déplacement linéaire du bras d'aiguillage (30) en direction du premier axe de rotation (31).

3. Aiguillage (10) selon l'une quelconque des revendications précédentes,
dans lequel la transmission (40) est conçue de telle sorte que, dans la deuxième position d'extrémité, elle forme une butée d'extrémité pour le déplacement du bras d'aiguillage (30) le long du premier axe de rotation (31) en direction de la deuxième position d'extrémité.

4. Aiguillage (10) selon l'une quelconque des revendications précédentes,
dans lequel le moteur électrique (50) est réalisé sous forme de moteur pas à pas, qui est en liaison d'entraînement avec la transmission (30) par l'intermédiaire d'une courroie dentée (51), dans lequel l'entraînement à courroie dentée correspondant (51) est conçu de telle sorte qu'il produit un rapport de transmission qui est supérieur à 2.

5. Aiguillage (10) selon l'une quelconque des revendications précédentes,
dans lequel la transmission (40) comprend un rouleau de commande (41) monté de manière rotative par rapport à un deuxième axe de rotation (42), qui est en liaison d'entraînement en rotation avec le moteur électrique (50), où le rouleau de commande (41) s'étend au moins par sections avec une forme de section transversale constante le long du deuxième axe de rotation (42), dans lequel la surface périphérique correspondante présente une distance de commande (44) par rapport au deuxième axe de rotation (42) qui varie le long de sa périphérie.

6. Aiguillage (10) selon la revendication 5, en référence à la revendication 2,
dans lequel la distance de commande (44) est maximale dans la première position d'extrémité.

7. Aiguillage (10) selon l'une quelconque des revendications 5 à 6, en référence à la revendication 3,
dans lequel la distance de commande (44) est minimale dans la deuxième position d'extrémité.

8. Aiguillage (10) selon l'une quelconque des revendications 5 à 7,
dans lequel le bras d'aiguillage (30) est monté de manière rotative sur un chariot séparé (20) par rapport au premier axe de rotation (31), dans lequel le chariot (20) est guidé de manière mobile linéairement en direction du premier axe de rotation (31), dans lequel une surface de commande (22) du chariot repose sur la surface périphérique du rouleau de commande (41).

9. Aiguillage (10) selon l'une quelconque des revendications 5 à 8,
dans lequel le rouleau de commande (41) présente, dans la zone de la surface périphérique (43), une rainure de commande (45) ou une saillie de commande qui s'étend en forme d'hélice par rapport au deuxième axe de rotation (42), dans lequel le bras d'aiguillage (30) est relié de manière fixe à un bras de commande séparé (33) qui est couplé par une extrémité libre à la rainure de commande (45) ou à la saillie de commande.

10. Aiguillage (10) selon la revendication 9, en référence à la revendication 8,
dans lequel le chariot (20) comprend une plaque de base (21) qui est agencée parallèlement au plan de transport, le bras d'aiguillage (30) et le bras de commande (33) étant agencés sur des côtés opposés de la plaque de base (21).

11. Aiguillage selon l'une quelconque des revendications précédentes,
dans lequel le premier axe de rotation (31) est agencé dans la zone comprise entre 30 % et 70 %, de préférence entre 40 % et 60 %, de la longueur de la surface de déviation (31) dans la direction de déplacement du produit transporté (60).

12. Système de transport (66) avec une première et une deuxième voie de transport (61 ; 62) et un aiguillage (10) selon l'une quelconque des revendications précédentes, dans lequel au moins la première voie de transport (61) comprend deux moyens de traction (63) espacés parallèlement, circulant sans fin, dans lequel tous les moyens de traction (63) définissent un plan de transport commun, dans lequel le premier axe de rotation (31) est orienté perpendiculairement au plan de transport, dans lequel il est agencé entre les deux moyens de traction (63) de la première voie de transport (61) .
